# FASCICULE DE BREVET EUROPEEN

(11) **EP 1 534 647 B1**
(45) Date de publication et mention de la délivrance du brevet: **04.03.2015**
(21) Numéro de dépôt: 03763954.9
(22) Date de dépôt: 10.07.2003
(51) Int. Cl.: C04B 28/34, C04B 111/00, C04B 111/27, C04B 111/34, B32B 13/02, C04B 28/02, C04B 28/14, E01C 5/06

(54) **COMPOSITION A BASE DE LIANT HYDRAULIQUE**
HYDRAULISCHE ZEMENTZUSAMMENSETZUNG
HYDRAULIC BINDER COMPOSITION

(30) Priorité: 10.07.2002 FR 0208680
(43) Date de publication de la demande: 01.06.2005
(73) Titulaire: Rhodia Opérations, 93306 Aubervilliers (FR)
(72) Inventeur: ORANGE, Gilles, F-95230 Soisy sous Montmorency (FR); JOUBERT, Daniel, F-60500 Vineuil Saint Firmin (FR)
(74) Mandataire: Chatelan, Florence Anne
(86) Numéro de dépôt international: PCT/FR2003/002163
(87) Numéro de publication internationale: WO 2004/007392

(56) Documents cités:
- EP-A- 0 590 948
- DE-A- 19 732 145
- FR-A1- 2 855 827
- JP-A- H0 978 035
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000157386 ISSN: 0009-2258 abrégé
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000060429 ISSN: 0009-2258 abrégé

## Description

La présente invention concerne notamment une composition destiné à la fabrication d'un article comprenant une ou plusieurs couches superposées ayant chacune une épaisseur inférieure à 5 centimètres, comprenant un liant hydraulique et au moins un composé choisi parmi un composé organique comprenant au moins deux fonctions hydrophiles et une chaîne hydrophobe, et un oligomère de polyamide.

L'utilisation de ces additifs en présence de liant hydraulique permet de fabriquer des articles et revêtements ayant une bonne protection contre la reprise d'eau et la fissuration, une résistance à l'humidité satisfaisante et de bonnes propriétés mécaniques telle que la résistance à la rupture.

Les liants hydrauliques sont généralement des ciments à base de silicates de calcium et/ou d'aluminates minéraux ou des plâtres à base de sulfate de calcium utilisés dans de nombreuses industries, particulièrement dans le domaine de la construction pour la réalisation d'infrastructure de bâtiments, d'ouvrages d'art, d'immeubles ou encore d'articles tels que des dalles ou des plaques et tuiles.

Ainsi, DE 19732145 A1 décrit un procédé pour poser un revêtement sur le sol, comprenant une étape de dépôt sur le sol d'une nappe en polypropylène, puis d'un enduit comprenant du ciment, un fluidifiant, un acide adipique 2,3,4,5-tétrahydroxy substitué et des fibres courtes de polyester.

JP 78/132030 A décrit une composition comprenant une émulsion de résine époxy, une résine mono ou polyamide polyamine, du ciment et un acide gras.

EP 0 590 948 A1 décrit un composite cimentaire comprenant un ciment hydraulique et un précurseur de polymère.

Enfin, JP 09/078035 A décrit une composition comprenant une solution de copolymère de nylon, obtenu par copolymérisation de epsilon-caprolactame ou d'hexaméthylène diamine et d'acide adipique avec du bispara-aminocyclohexylméthane, de l'acide sébacique, du méthacrylamide, suivie d'une N-alkoxylation, et du ciment de Portland.

Les liants hydrauliques peuvent également être renforcés par des fibres pour la fabrication de fibrociments utilisés, par exemple, comme matériau pour la réalisation d'articles de revêtement de toiture, de tuyauterie ou de réservoir.

Les liants hydrauliques sont fabriqués à partir de matériaux naturels qui sont calcinés à de très haute température et transformés en composés minéraux capables de réagir avec l'eau pour produire un liant qui après durcissement forme une masse compacte présentant de bonnes propriétés mécaniques.

Toutefois, les articles obtenus à partir des liants hydrauliques connus dans l'art antérieur réagissent avec l'eau au cours du temps. La pénétration d'eau provoque des efflorescences à la surface des articles résultant de phénomènes de carbonatation, et peut éventuellement conduire à une dégradation des propriétés mécaniques. La pénétration de l'eau s'accompagne généralement d'une faible résistance au cycle gel/dégel des structures.

De même, les articles de faibles épaisseurs rencontrent lors de leur séchage des problèmes de fissuration, notamment provoqué par évaporation de l'eau.

De tels phénomènes peuvent affecter les propriétés mécaniques et la durabilité des articles ou ouvrages réalisés avec un tel liant.

Comme liant hydraulique présentant de tels inconvénients, on peut citer : le ciment portland, le ciment alumineux ou fondu, le ciment Prompt et les ciments naturels de type VICALPE et RAPIDE.

Il existe donc un besoin de liant hydraulique ayant une bonne tenue mécanique et ayant une faible absorption de l'eau pour remédier aux inconvénients mentionnés précédemment.

Il a été constaté que l'utilisation d'additifs tels qu'un composé organique comprenant au moins deux fonctions hydrophiles et une chaîne hydrophobe et/ou un oligomère de polyamide comprenant un faible nombre d'unités récurrentes en présence de liant hydraulique permettait de fabriquer des articles et revêtements ayant une bonne protection contre la reprise d'eau et une résistance à l'humidité satisfaisante.

Les articles ou revêtements selon l'invention obtenus à partir d'une composition comprenant un liant hydraulique et ces additifs présentent également de bonnes propriétés mécaniques telle que la résistance à la rupture et à la fissuration.

De très bons résultats ont notamment été observés sur des articles comprenant une ou plusieurs couches superposées ayant chacune une épaisseur inférieure à 5 centimètres.

La présente invention concerne un procédé de fabrication d'un article comprenant une ou plusieurs couches superposées ayant chacune une épaisseur inférieure à 5 centimètres, obtenu par l'utilisation d'une composition telle que définie à la revendication 1. composé choisi parmi :

Les procédés de fabrication d'article de type ciments ou fibrociments sont largement connus de l'art antérieur. A titre d'exemple on peut citer le procédé Hatscheck pour la fabrication de fibrociments, ou tout procédé connus de l'homme du métier pour la fabrication de matériaux cimentaires (coulage, injection ou projection, par exemple).

Généralement, le liant hydraulique est mélangé à une composition comprenant de l'eau et des additifs pour former les articles. On peut éventuellement chauffer et/ou malaxer la composition avant de la laisser se prendre en masse dans un moule par exemple.

Selon les articles que l'on souhaite obtenir, un homme du métier est tout à fait à même de les fabriquer à partir d'une composition selon l'invention comprenant un liant hydraulique.

Selon l'invention les additifs tels que ledit composé organique, l'oligomère de polyamide ou encore des fibres, du latex et un copolymère amphiphile hydrosoluble peuvent être ajoutés dans la composition au moment de la fabrication de l'article de manière extemporanée. Il est également possible que ces composés soit additionnés au liant hydraulique sec.

Préférentiellement, la composition selon l'invention comprend un latex et/ou des fibres.

Selon l'invention, la composition comprend préférentiellement de 0,05 à 10 % en poids dudit composé organique par rapport au poids total de liant hydraulique.

Préférentiellement, la composition comprend de 0,05 à 10 % en poids d'oligomère de polyamide par rapport au poids total de liant hydraulique.

Dans le cas où du latex est ajouté à la composition selon l'invention, celui-ci peut représenter de 0,1 à 15 % en poids par rapport au poids total de liant hydraulique.

Préférentiellement, la composition peut comprendre de 0,1 à 10 % en poids de fibres par rapport au poids total de liant hydraulique.

Le composé organique est choisi dans le groupe constitué par l'acide succinique, l'acide sébacique, l'acide adipique, l'acide octanodioïque, l'acide décanodioïque, l'acide dodécanoïque, l'acide brassylique, l'acide glutarique, ainsi que leurs sels, dérivés et/ou mélanges. Par exemple, le composé organique peut être un mélange d'acides adipique, d'acide glutarique et d'acide succinique ou un mélange d'acides pour la fabrication d'acide adipique.

Le sels de ces composés organiques sont préférentiellement solubles dans un milieu aqueux et peuvent être par exemple des sels de sodium, potassium, ammonium et de diamine.

. Les oligomères de polyamide sont obtenus à partir d'acide adipique et d'hexaméthylène diamine en proportions non- stoechiométriques avec un excès d'acide adipique pouvant aller jusqu'à 50%. Les oligomères de polyamide peuvent porter une fonction par exemple choisie parmi les phosphates, phosphonates, sulfonates, alkoxysilanes, dicarboxylates, amino-carboxylates, anhydrides, époxys et diols. Préférentiellement, on peut utiliser un oligomère obtenu à partir d'acide adipique, d'hexaméthylène diamine et d'un autre monomère comportant les fonctions mentionnés précédemment, telles que deux fonctions acides carboxylique et une fonction acide sulfonique, par exemple l'acide isophtalique sulfoné AlSNa.

Préférentiellement, le latex est un polymère filmogène insoluble dans l'eau préparé à partir d'au moins un monomère à insaturation éthylénique. Ledit monomère à insaturation éthylénique peut être choisi parmi le styrène, le butadiène, les esters acryliques ou méthacryliques d'alkyle en C₁-C₁₂ et leurs acides correspondants, et les esters vinyliques. Avantageusement, le polymère filmogène insoluble dans l'eau est choisi parmi le groupe constitué par les homopolymères vinylique ou acrylates, et les copolymères d'acétate de vinyle, de styrène/butadiène, de styrène/acrylate, d'esters acryliques et de styrène/butadiène/acrylate.

Selon un mode de réalisation particulier du procédé de l'invention, la composition de l'invention comprend un copolymère amphiphile hydrosoluble choisi parmi :
(i) au moins un polymère obtenu par polymérisation
   □ d'au moins un monomère (I) éthyléniquement insaturé de type acide monocarboxylique ou polycarboxylique, ou bien précurseur d'acides carboxyliques de type anhydride, aliphatique, cyclique, linéaire ou ramifié, et
   □ d'au moins un monomère hydrocarboné (II), linéaire ou ramifié, monoéthyléniquement insaturé
(ii) au moins un polymère issu de la polymérisation d'au moins un monomère (I) acide monocarboxylique ou polycarboxylique, ou anhydride, aliphatique, cyclique, linéaire ou ramifié, éthyléniquement insaturé, et comprenant au moins un greffon hydrophobe, hydrocarboné, en C₄-C₃₀, saturé ou non, éventuellement interrompu par un ou plusieurs hétéroatomes
(iii) au moins un polymère obtenu par modification chimique comme par exemple une esterification, une transesterification ou une amidification d'un polymère précurseur comprenant d'une part des sites sur lesquels on peut greffer un greffon hydrophobe, comme par exemple des sites acides carboxyliques ou des esters, ce greffon comprenant d'autre part des motifs acides carboxyliques ou précurseurs d'acides carboxyliques.

Selon un mode de réalisation particulier de la première variante (i), on peut citer tout d'abord les polymères issus de la polymérisation :
- d'au moins un monomère (I) de formule suivante :

   (R¹)(R¹)C = C(R'¹)-COOH (I)

   formule dans laquelle les radicaux R¹, R'¹, identiques ou différents, représentent un atome d'hydrogène, un radical hydrocarboné en C₁ - C₁₀ comprenant éventuellement un groupement - COOH, un groupement - COOH ; et
- d'au moins un monomère de formule (II) de formule suivante :

   (R2)(R3) C = C (R5)(R6) (II)

   formule dans laquelle :
   - le radical R² représente un atome d'hydrogène, radical alkyle, linéaire ou ramifié, en C₁ - C₁₀ éventuellement substitué par des hétéroatomes.;
   - le radical R³ représente un radical alkyle, linéaire ou ramifié, en C₁ - C₁₀ éventuellement substitué par des hétéroatomes, ou un radical -O-R⁴, c'est à dire un ether vinylique, avec R⁴ représente un radical alkyle, linéaire ou ramifié, en C₁ - C₁₀ éventuellement substitué par des hétéroatomes;
   - le radical R⁵ représente un atome d'hydrogène, un radical alkyle, linéaire ou ramifié, en C₁ - C₁₀ éventuellement substitué par des hétéroatomes.;
   - le radical R⁶ représente un atome d'hydrogène, un radical alkyle, linéaire ou ramifié, en C₁ - C₁₀ éventuellement substitué par des hétéroatomes.;
étant entendu que au moins un des radicaux R², R³, R⁵ ou R⁶ représente un radical alkyle, linéaire ou ramifié, en C₁ - C₁₀ éventuellement substitué par des hétéroatomes;

Selon un mode de réalisation préféré de l'invention, le monomère de formule (I) est tel que l'un des radicaux R¹ est un atome d'hydrogène ; l'autre radical R¹ représente un atome d'hydrogène, un groupement -COOH ou un groupement - (CH₂)ₙ - COOH dans lequel n est compris entre 1 et 4, un radical alkyle en C₁-C₄ ; R'¹ représente un atome d'hydrogène, en groupement -(CH₂)ₘ- COOH dans lequel m est compris entre 1 et 4, un radical alkyle en C₁-C₄.

De préférence, l'une des radicaux R¹ représente un atome d'hydrogène, l'autre radical R¹ représente un atome d'hydrogène, un groupement -COOH ou (CH₂)-COOH, un radical méthyle, et R'¹, représente un atome d'hydrogène, un groupement -CH₂ COOH ou un radical méthyle.

Selon un mode de réalisation plus particulier, le monomère de formule (I) est choisi parmi les acides ou anhydrides acrylique, méthacrylique, citraconique, maléique, fumarique, itaconique, ou crotonique.

De manière encore plus préférée le monomère de formule (I) est choisi parmi l'anhydride maléique.

En ce qui concerne le monomère de formule (II), ce dernier peut être notamment choisi parmi l'éthylène, le propylène, le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène (ou 2,4,4-triméthyl 1-pentène), le 2-méthyl 3,3-diméthyl 1-pentène, ou pour les ether vinyliques parmi l'isobutylvinyl ether, le methylvinyl ether, le 1-menthyl vinyl ether, le phenyl vinyl ether ou l'octadecylevinyl ether.

De préférence, le copolymère de formule (i) est issu de la polymérisation de l'anhydride maléique et de l'isobutylène.

Il est précisé que le polymère (i) est obtenu plus particulièrement en effectuant une polymérisation radicalaire des monomères (I) et (II).

Ces composés sont bien connus de l'homme de l'art. A titre de polymère de ce type, on peut citer celui commercialisé sous la dénomination Geropon^{®} T36 (anhydride maléique/diisobutylène), commercialisé par Rhodia Chimie, le Sokalan® CP9 (anhydride maléique/oléfine) commercialisé par BASF, ainsi que les résines Gantrez commercialisées par la société ISP.

Dans le cas où un copolymère amphiphile hydrosoluble tel que décrit ci-dessus est ajouté à la composition selon l'invention, celui-ci représente avantageusement 0,1 à 5 % en poids par rapport au poids total de liant hydraulique.

Les fibres peuvent être des fibres naturelles ou artificielles par exemple choisies dans le groupe constitué par les fibres de verre, les fibres de carbone, les fibres d'acier, les fibres de polyamide, les fibres de polyester, les fibres de poly(alcool vinylique), les fibres de polypropylène, les fibres céramiques et les fibres de poly(acrylonitrile), leurs dérivées et/ou leurs mélanges.

Les fibres de polyamides utilisés seront avantageusement celles utilisés habituellement dans le domaine des articles textiles ou des fils et fibres à applications techniques. À titre d'exemple, les polyamides qui peuvent être utilisés dans la présente invention comprennent le PA 6.6, le PA 6, le copolymère PA 6.6-PA 6, les polyamides semi-aromatiques, tels que le polyamide 6T, l'Amodet® (commercialisé par la société Amoco), l'HTN® (commercialisé par la société DuPont), les autres polyamides 11, 12 et 4-6, par exemple, des copolyamides et/ou leurs mélanges. Les polyamides peuvent être de structure linaire ou ramifiée, comme par exemple le polyamide étoile commercialisé par la société Rhodia sous la marque Technylstar®. Selon l'invention, il est possible que les fibres de polyamide soient traitées au préalable par un ou plusieurs additifs.

Préférentiellement, la composition selon l'invention comprend un copolymère amphiphile hydrosoluble tel que décrit ci-dessus, un latex, et éventuellement des fibres.

Préférentiellement, le liant hydraulique est à base d'au moins un composé choisi dans le groupe constitué par du silicate de calcium (ciment Portland), du sulfate de calcium (plâtre), du phosphate de calcium ou autres phosphates (ciment dentaire). Les liants hydrauliques peuvent être également conditionnés en mélange avec d'autres additifs tels que du sable ou du gravier par exemple, pour former un mortier prêt à l'emploi.

La présente invention concerne également une composition destinée à la fabrication d'un article comprenant une ou plusieurs couches superposées ayant chacune une épaisseur inférieure à 5 centimètres, telle qe définie à la revendication 22.

Cette composition peut également comprendre en outre au moins un composé choisi parmi le groupe constitué par un latex, un copolymère amhiphile hydrosoluble, et des fibres. Les latex, le copolymère amhiphile hydrosoluble et les fibres sont les mêmes que définis précédemment.

La présente invention concerne aussi un article comprenant une ou plusieurs couches superposées ayant chacune une épaisseur inférieure à 5 centimètres obtenu selon le procédé de fabrication et/ou la composition tels que définis précédemment.

Les articles selon l'invention peuvent être des tuiles, des plaques, des panneaux, des tuyaux, des blocs, des réservoirs, des dalles, des pavés ou des cloisons par exemple, ou encore des articles de type revêtement tels que des enduits, des coulis ou des chapes, par exemple.

Préférentiellement, l'article possède une épaisseur inférieure à 5 centimètres, avantageusement inférieur à 2 centimètres, et préférentiellement inférieur ou égal à 1 centimètre.

La présente invention concerne également l'utilisation d'une composition telle que définie précédemment pour la fabrication d'article comprenant une ou plusieurs couches superposées ayant chacune une épaisseur inférieure à 5 centimètres tel qu'un enduis, un revêtement ou un coulis.

La présente invention concerne aussi l'utilisation d'une composition telle que définie précédemment pour la fabrication d'article comprenant une ou plusieurs couches superposées ayant chacune une épaisseur inférieure à 5 centimètres tel qu'un fibrociment.

### Exemple 1

Des gâteaux de ciments sont préparés selon une procédé qui consiste à filtrer une suspension de ciment, de charges et d'additifs en présence de 0 % 0,5 % ou 1 % d'additifs choisis parmi de l'acide adipique seul, ou un mélange d'acide adipique et de poudre latex à base de copolymère acétate-versatate (50/50 ou 25/75, respectivement).

La composition utilisée comprend 30 % de ciment (commercialisé par Lafarge sous la référence HTS 52.5) dilué dans l'eau avec un rapport eau/ciment = 3 (E/C).

Le slurry comprenant les additifs est filtré pour obtenir un gâteau de ciment. Les gâteaux sont laissées 24 heures dans une salle conditionnée à 25°C et avec une humidité relative (HR) de 60% avant test. Les gâteaux ont une épaisseur approximative de 1 centimètre.

Les résultats sont mentionnés dans le tableau 1.

**Tableau 1**

| **Additifs** | **Adipique** | **Adipique + PAV 50/50** | **Adipique + PAV 25/75** |
|---|---|---|---|
| 0% | Forte Fissuration | Forte Fissuration | Forte Fissuration |
| 0,5% | Légère Fissuration | Pas de Fissuration | Légère Fissuration |
| 1% | Pas de Fissuration | Pas de Fissuration | Pas de Fissuration |

Adipique + PAV 50/50 représente un mélange de 50 % en poids d'acide adipique et de 50 % en poids de PAV.
Adipique + PAV 25/75 représente un mélange de 25 % en poids d'acide adipique et de 75 % en poids de PAV.

Ces résultats montrent une amélioration de la tenue du ciment par l'ajout d'additifs tels que de l'acide adipique ou de l'acide adipique et de la poudre latex acétate-versatate (PAV).

### Exemple 2

Les objets en ciment obtenus dans l'exemple 1 sont soumis à deux tests mesurant la reprise d'humidité et l'absorption d'eau.

La mesure d'absorption d'eau est réalisée en exposant les objets de ciment additivés obtenus dans l'exemple précédent, préalablement séchés une heure dans une étuve à 80°C et pesés, dans une enceinte présentant une humidité relative (HR) de 75 % à 25°C pendant 2, 5 et 12 jours.

Le test de la goutte d'eau consiste à mesurer le temps nécessaire à la pénétration de quatre gouttes d'eau permutée déposées à température ambiante et après le même processus de séchage que précédemment sur la surface de l'objet ciment obtenu dans l'exemple.

Les résultats sont mentionnés dans le tableau 2.

**Tableau 2**

| | **% d'additifs** | **Absorption d'eau (RH 75 %, 25°C)** | | | **Test Goutte d'eau** |
|---|---|---|---|---|---|
| | | **2 jours** | **5 jours** | **12 jours** | **Temps d'absorption (s)** |
| Témoin | 0 | 1,28 | 2 | 2,52 | 4 |
| Adipique | 0,5 | 0,75 | 1,38 | 1,81 | 7 |
| Adipique-PAV 50/50 | 0,5 | 0,98 | 1,6 | 2,11 | 16 |
| Adipique-PAV 50/50 | 1 | 0,89 | 1,49 | 1,99 | 34 |
| Adipique-PAV 25/75 | 0,5 | 0,85 | 1,58 | 2,08 | 8 |
| Adipique-PAV 25/75 | 1 | 0,82 | 1,38 | 1,82 | 17 |

Ces résultats montrent que l'on obtient une meilleure tenue à l'eau avec du ciment comprenant des additifs tels que de l'acide adipique ou de l'acide adipique et de la poudre latex acétate-versatate.

### Exemple 3

On prépare à l'aide d'un mélangeur les compositions cimentaires suivantes:

| **Composition** | **1** | **2** | **3** |
|---|---|---|---|
| Ciment commercialisé par Lafarge | 100 | 100 | 100 |
| sous la référence HTS 52.5 | | | |
| Fumée de silice commercialisée par | 10 | 10 | 10 |
| Elkem sous la référence 940 U | | | |
| Acide adipique | | 0,4 | 2 |
| Latex PAV22 | | 0,3 | 1,5 |
| Geropon T36 | | 0,3 | 1,5 |
| | | | |
| Eau | 50 | 50 | 50 |

On effectue ensuite une mesure de la densité de ces suspensions (par pesée de 250 cm³ de cette suspension) et on constate que le système d'additif selon l'invention permet un abaissement de cette densité

| | | | |
|---|---|---|---|
| Densité de la pâte cimentaire | 1,92 | 1,64 | 1,42 |

On coule ensuite cette suspension dans des moules de dimension 16X4X4 cm, de manière à préparer des éprouvettes sur lesquelles plusieurs types de mesures vont être effectuées. On laisse vieillir ces éprouvettes 30 jours à température ambiante avant de faire ces mesures, qui sont :
• la densité des éprouvettes , pour juger de la capacité "allégeante" du système d'additif

| **Composition** | **1** | **2** | **3** |
|---|---|---|---|
| | | | |
| Densité de l'article en ciment après prise et vieillissement 30 Jours | 1,65 | 1,47 | 1,21 |

• leur comportement vis à vis de l'eau (hydrophobie, effet perlant), à l'aide du test de la goutte d'eau tel que décrit à l'exemple 2, après séchage des éprouvettes dans les mêmes conditions qu'à l'exemple 2. Le test est réalisé à la fois sur la surface externe de l'éprouvette, et sur la surface interne de l'éprouvette après avoir cassé cette dernière (test réalisé au niveau de la cassure)

**Temps d'absorption**

| **Composition** | **1** | **2** | **3** |
|---|---|---|---|
| Surface externe de l'éprouvette | 3 mn | 15 mn | > 30 mn |
| Surface interne de l'éprouvette (après cassure) | 15 secondes | 5 mn | > 30 mn |

• les propriétés de résistance mécanique, en flexion 3 points, selon la méthode de mesure décrite ci-dessous à l'exemple 4:

| **Composition** | **1** | **2** | **3** |
|---|---|---|---|
| Contrainte maximale (max en kN) | 0,3 | 0,35 | 0,51 |

Les propriétés de compression des éprouvettes des compositions 2 et 3 ne sont pas dégradées de manière rhédibitoire par rapport à l'éprouvette de la composition 1 malgré l'abaissement de la densité apportée par ces compositions 2 et 3

### Exemple 4

Différent matériaux composites, de type fibrociment, d'une épaisseur de 5 millimètres ont été préparés comme indiqué ci-après.

La composition du fibrociment utilisé dans les exemples est la suivante :
- ciment, commercialisé par Lafarge sous la référence HTS 52.5 200 g ;
- fumée de silice, commercialisée par Elkem sous la référence 940 U 35 g ;
- cellulose extraite de *Pinus Radiata* 10 g ;
- fibres de renfort polyamide 5 g ;
- additifs 2g ;
- eau 750 g

La cellulose est d'abord dépulpée durant une heure sous agitation intense, puis les autres ingrédients sont ajoutés. L'ensemble, après malaxage pendant 15 minutes, est versé dans un moule, tiré sous léger vide primaire. Le gâteau résultant est alors soumis à une pression de 10 tonnes (10 MPa) afin de mettre en forme les échantillons. Pour chaque formulation, 6 éprouvettes de fibrociment sont fabriquées : dimensions 120 x 30 x 5 mm.

Ces éprouvettes sont laissées 24 heures à température ambiante dans une enceinte saturée en humidité, puis sont mises en maturation 24 heures à 60°C dans une enceinte toujours saturée en humidité, et finalement laissées au moins 24 heures dans une salle conditionnée à 20°C et avec une humidité relative (HR) de 65% avant test.

Les essais mécaniques sont réalisés en flexion 3 points (entre axe : 100 mm), à une vitesse d'essai de 0,1 mm/min. Ce test est un test classique de flexion 3 points. On enregistre la courbe Force-Déplacement, et on calcule la contrainte équivalente correspondant au maximum de charge (max). On calcule également la contrainte équivalente correspondant à une flèche de l'éprouvette de 2mm.

Dans tous les cas il n'est pas noté d'apparition de fissure sur les bords des éprouvettes, même lors du vieillissement à long terme des produits.

Le tableau 3 présente l'accroissement relatif de la contrainte maximale obtenue lors du test d'un fibrociment renforcé avec additif, par rapport à la contrainte maximale obtenue lors du test d'un fibrociment sans additif. Cet accroissement relatif est noté max.

**Tableau 3**

| **Additif** | **max** |
|---|---|
| Oligomère PA acide | + 30% |
| Oligomère PA AlSNa | + 7% |
| Adipique | + 20% |
| Adipique + Latex PAV22 (50/50) | + 22% |
| Latex PAV22 | + 10% |

L'oligomère PA acide est obtenu par condensation d'acide adipique et d'hexaméthylène diamine avec une sur stoechiométrie en acide de 20 % par rapport à la stoechiométrie d'équilibre (1 mole de diacide pour 1 mole de diamine) comportant environ de 8 à 14 motifs.

L'oligomère PA AlSNa est un sel de sodium d'oligomère polyamide sulfoné obtenu par polycondensation de 3 monomères (acide adipique, hexaméthylène diamine et acide isophtalique sulfoné) comportant environ de 8 à 14 motifs.

Le PAV22 de nom commercial Rhoximat® PAV22 est une poudre de latex à base de copolymère acétate-versatate.

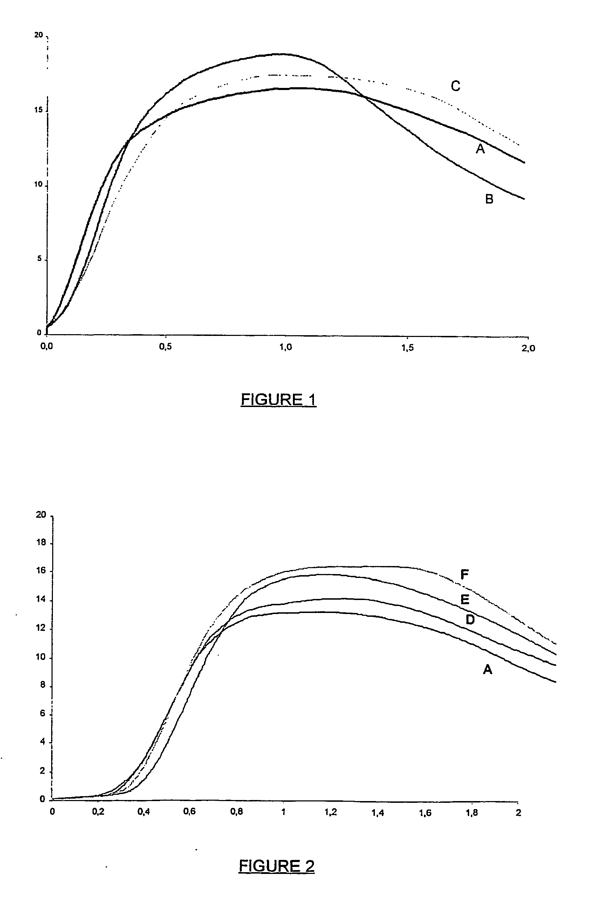

Les courbes représentant la contrainte supportée en fonction de la flèche de l'éprouvette sont reportées sur la Figure 1 (fibrociments avec fibres polyamide et addition d'oligomères polyamide) et sur la Figure 2 (fibrociments renforcés avec fibres polyamide et addition adipique et/ou latex).

Sur ces Figures, les abscisses correspondent à la flèche de l'éprouvette en millimètres, les ordonnées correspondent à la contrainte de flexion en MPa.

Les fibres polyamides utilisées sont le suivantes :
- Fibre PA 0,6 dtex : c'est une fibre de polyamide 66 de section ronde, fine et produite par Rhodia Technical Fibers pour application Flock. C'est une fibre non frisée coupée à 6mm dont les caractéristiques mécaniques sont notamment un allongement à la rupture de 80%.
- Fibre PA 0,5 dtex : c'est une fibre de polyamide 66 de section ronde, ultra-fine et produite par Rhodia Technical Fibers pour application Flock. C'est une fibre non frisée coupée à 6mm dont les caractéristiques mécaniques sont notamment un allongement à la rupture de 20%.

Sur la Figure 1 :
- La courbe A correspond aux fibres de polyamide (fibre PA 0,5 dtex) seules ;
- La courbe B correspond au mélange de fibres de polyamide (fibre PA 0,5 dtex) et d'oligomère de polyamide acide ; et
- La courbe C correspond au mélange de fibres de polyamide (fibre PA 0,5 dtex) et d'oligomère AlSNa.

Sur la Figure 2 :
- La courbe A correspond aux fibres de polyamide (fibre PA 0,6 dtex) seules;
- La courbe D correspond au mélange de fibres de polyamide (fibre PA 0,6 dtex) et de PAV22;
- La courbe E correspond au mélange de fibres de polyamide (fibre PA 0,6 dtex), d'acide adipique et de PAV22 (50/50 : adipique/PAV22), et
- la courbe F correspond au mélange de fibres de polyamide (fibre PA 0,6 dtex) etd'acide d'adipique.

La contrainte maximale supportable par le fibrociment est augmentée en présence d'additifs. De plus, la ductilité du matériau peut être sensiblement accrue par l'ajout d'un additif ce qui représente une amélioration notable des propriétés d'usage.

Les résultats obtenus dans les Figures 1 et 2 montrent l'intérêt d'utiliser des fibres de faible titre de manière à obtenir un gain maximum tant sur la contrainte maximale supportable par le matériau que sur sa ductilité.

### Exemple 5

Différent matériaux composites, de type fibrociment, d'une épaisseur de 5 millimètres ont été préparés comme indiqué ci-après.

La composition du fibrociment utilisé dans les exemples est la suivante :
- ciment, commercialisé par Lafarge sous la référence HTS 52.5 200 g ;
- fumée de silice, commercialisée par Elkem sous la référence 940 U 35 g ;
- cellulose extraite de *Pinus Radiata* 10 g ;
- fibres de renfort 5 g ;
- additifs 2g ;
- eau 750 g

La cellulose est d'abord dépulpée durant une heure sous agitation intense, puis les autres ingrédients sont ajoutés. L'ensemble, après malaxage pendant 15 minutes, est versé dans un moule, tiré sous léger vide primaire. Le gâteau résultant est alors soumis à une pression de 10 tonnes (10 MPa) afin de mettre en forme les échantillons. Pour chaque formulation, 6 éprouvettes de fibrociment sont fabriquées : dimensions 120 x 30 x 5 mm.

Ces éprouvettes sont laissées 24 heures à température ambiante dans une enceinte saturée en humidité, puis sont mises en maturation 24 heures à 60°C dans une enceinte toujours saturée en humidité, et finalement laissées au moins 24 heures dans une salle conditionnée à 20°C et avec une humidité relative (HR) de 65% avant test.

Les essais mécaniques sont réalisés en flexion 3 points (entre axe : 100 mm), à une vitesse d'essai de 0,1 mm/min. Ce test est un test classique de flexion 3 points. On enregistre la courbe Force-Déplacement, et on calcule la contrainte équivalente correspondant au maximum de charge (max). On calcule également la contrainte équivalente correspondant à une flèche de l'éprouvette de 2mm.

Dans tous les cas il n'est pas noté d'apparition de fissure sur les bords des éprouvettes, même lors du vieillissement à long terme des produits.

Le système d'additifs suivant a été utilisé (les pourcentages exprimés sont des pourcentages en poids :
- -Latex PAV22 40%
- Adipique 40%
- Géropon T36 20%

Ces additifs sont utilisés à une teneur de 1 % en poids par rapport au ciment.

Les fibres utilisées sont des fibres de polyamide PA 6.6 de type 78f136 coupées à 6mm , ou des fibres APV RM 182® commercialisées par la société Kurarray coupées à 6 mm

La contrainte maximale supportable par le fibrociment en présence de fibres (APV, ou PA) est maintenue en présence d'additifs.

De plus, la densité des matériaux est sensiblement réduite.

Enfin, le pouvoir hydrohobant est nettement amélioré en présence des additifs.

## Revendications

1. Procédé de fabrication d'un article comprenant une ou plusieurs couches superposées ayant chacune une épaisseur inférieure à 5 centimètres, obtenu par l'utilisation d'une composition comprenant un liant hydraulique et au moins un composé choisi parmi :
- un composé organique comprenant au moins deux fonctions hydrophiles et une chaîne hydrophobe choisi dans le groupe constitué par l'acide succinique, l'acide sébacique, l'acide adipique, l'acide octanodioïque, l'acide décanodioïque, l'acide dodécanoïque, l'acide brassylique, l'acide glutarique, ainsi que leurs sels, dérivés et/ou mélanges, et
- un oligomère de polyamide comprenant moins de 20 unités récurrentes obtenu à partir d'acide adipique et d'hexaméthylène diamine en proportions non-stoechiométriques avec un excès d'acide adipique pouvant aller jusqu'à 50%.

2. Procédé de fabrication selon la revendication 1, **caractérisé en ce que** la composition comprend un latex.

3. Procédé de fabrication selon la revendication 1 ou 2, **caractérisé en ce que** la composition comprend des fibres.

4. Procédé de fabrication selon l'une quelconque des revendications 1 à 3, **caractérisé en ce que** la composition comprend de 0,05 à 10 % en poids dudit composé organique par rapport au poids total de liant hydraulique.

5. Procédé de fabrication selon l'une quelconque des revendications 2 à 4, **caractérisé en ce que** la composition comprend de 0,1 à 15 % en poids de latex par rapport au poids total de liant hydraulique.

6. Procédé de fabrication selon l'une quelconque des revendications 3 à 5, **caractérisé en ce que** la composition comprend de 0,1 à 10 % en poids de fibres par rapport au poids total de liant hydraulique.

7. Procédé de fabrication selon la revendication 1 à 6, **caractérisé en ce que** le composé organique est un mélange d'acides adipique, d'acide glutarique et d'acide succinique.

8. Procédé de fabrication selon l'une quelconque des revendications 2 à 7, **caractérisé en ce que** le latex est un polymère filmogène insoluble dans l'eau préparé à partir d'au moins un monomère à insaturation éthylénique.

9. Procédé de fabrication selon la revendication 8, **caractérisé en ce que** le monomère à insaturation éthylénique est choisi parmi le styrène, le butadiène, les esters acryliques ou méthacryliques d'alkyle en C₁-C₁₂ et leurs acides correspondants, et les esters vinyliques.

10. Procédé de fabrication selon la revendication 8 ou 9, **caractérisé en ce que** le polymère filmogène insoluble dans l'eau est choisi parmi le groupe constitué par les homopolymères vinylique ou acrylates, et les copolymères d'acétate de vinyle, de styrène/butadiène, de styrène/acrylate, d'esters acryliques et de styrène/butadiène/acrylate.

11. Procédé de fabrication selon l'une des revendications précédentes, **caractérisé en ce que** la composition comprend un copolymère amphiphile hydrosoluble étant choisi parmi :
(i) au moins un polymère obtenu par polymérisation
∘ d'au moins un monomère (I) éthyléniquement insaturé de type acide monocarboxylique ou polycarboxylique, ou bien précurseur d'acides carboxyliques de type anhydride, aliphatique, cyclique, linéaire ou ramifié, , et
∘ d'au moins un monomère hydrocarboné (II), linéaire ou ramifié, monoéthyléniquement insaturé ,
(ii) au moins un polymère issu de la polymérisation d'au moins un monomère (I) acide monocarboxylique ou polycarboxylique, ou anhydride, aliphatique, cyclique, linéaire ou ramifié, éthyléniquement insaturé, et comprenant au moins un greffon hydrophobe, hydrocarboné, en C₄-C₃₀, saturé ou non, éventuellement interrompu par un ou plusieurs hétéroatomes,
(iii) au moins un polymère obtenu par modification chimique comme par exemple une esterification, une transesterification ou une amidification d'un polymère précurseur comprenant d'une part des sites sur lesquels on peut greffer un greffon hydrophobe, comme par exemple des sites acides carboxyliques ou des esters, ce greffon hydrophobe comprenant d'autre part des motifs acides carboxyliques ou précurseurs d'acides carboxyliques.

12. Procédé de fabrication selon la revendication 11, **caractérisé en ce que** dans la variante (i)
• le monomère (I) a la formule suivante :
(R¹)(R¹) C = C(R'¹) - COOH (I)
formule dans laquelle les radicaux R¹, R'¹, identiques ou différents, représentent un atome d'hydrogène, un radical hydrocarboné en C₁ - C₁₀ comprenant éventuellement un groupement - COOH, un groupement - COOH ; et
• le monomère de formule (II) a la formule suivante :
(R2)(R3) C = C(R⁵)(R⁶) (II)
formule dans laquelle :
- le radical R² représente un atome d'hydrogène, radical alkyle, linéaire ou ramifié, en C₁ - C₁₀ éventuellement substitué par des hétéroatomes ;
- le radical R³ représente un radical alkyle, linéaire ou ramifié, en C₁ - C₁₀ éventuellement substitué par des hétéroatomes, ou un radical -O-R⁴, c'est à dire un ether vinylique, avec R⁴ représente un radical alkyle, linéaire ou ramifié, en C₁ - C₁₀ éventuellement substitué par des hétéroatomes;
- le radical R⁵ représente un atome d'hydrogène, un radical alkyle, linéaire ou ramifié, en C₁ - C₁₀ éventuellement substitué par des hétéroatomes.;
- le radical R⁶ représente un atome d'hydrogène, un radical alkyle, linéaire ou ramifié, en C₁ - C₁₀ éventuellement substitué par des hétéroatomes.;
étant entendu que au moins un des radicaux R², R³, R⁵ ou R⁶ représente un radical alkyle, linéaire ou ramifié, en C₁ - C₁₀ éventuellement substitué par des hétéroatomes;

13. Procédé de fabrication selon la revendication 12, **caractérisé en ce que** le monomère de formule (I) est tel que :
- l'un des radicaux R¹ est un atome d'hydrogène ;
- l'autre radical R¹ représente un atome d'hydrogène, un groupement -COOH ou un groupement - (CH₂)ₙ - COOH dans lequel n est compris entre 1 et 4, un radical alkyle en C₁-C₄ ;
- R'¹ représente un atome d'hydrogène, en groupement -(CH₂)ₘ - COOH dans lequel m est compris entre 1 et 4, un radical alkyle en C₁-C₄.

14. Procédé de fabrication selon la revendication 13, **caractérisé en ce que** le monomère de formule (I) est tel que :
- l'un des radicaux R¹ représente un atome d'hydrogène,
- l'autre radical R¹ représente un atome d'hydrogène, un groupement -COOH ou (CH₂)-COOH, un radical méthyle, et
- R'¹ représente un atome d'hydrogène, un groupement -CH₂ COOH ou un radical méthyle.

15. Procédé de fabrication selon la revendication 14, **caractérisé en ce que** le monomère de formule (I) est choisi parmi les acides ou anhydrides acrylique, méthacrylique, citraconique, maléique, fumarique, itaconique, ou crotonique

16. Procédé de fabrication selon la revendication 15, **caractérisé en ce que** le monomère de formule (I) est l'anhydride maléique

17. Procédé de fabrication selon la revendication 12, **caractérisé en ce que** le monomère de formule (II), est choisi parmi l'éthylène, le propylène, le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène (ou 2,4,4-triméthyl 1-pentène), le 2-méthyl 3,3-diméthyl 1-pentène, l'isobutylvinyl ether, le methylvinyl ether, le 1-menthyl vinyl ether, le phenyl vinyl ether ou l'octadecylevinyl ether

18. Procédé de fabrication selon l'une des revendications 12 à 17, **caractérisé en ce que** le copolymère de formule (i) est issu de la polymérisation de l'anhydride maléique et de l'isobutylène

19. Procédé de fabrication selon l'une quelconque des revendications 11 à 18, **caractérisé en ce que** la composition comprend de 0,1 à 5% en poids de copolymère amphiphile hydrosoluble par rapport au poids total de liant hydraulique

20. Procédé de fabrication selon l'une quelconque des revendications 3 à 19, **caractérisé en ce que** les fibres sont choisies dans le groupe constitué par les fibres de verre, les fibres de carbone, les fibres d'acier, les fibres de polyamide, les fibres de polyester, les fibres de poly(alcool vinylique), les fibres de polypropylène et les fibres de poly(acrylonitrile), leurs dérivées et/ou leurs mélanges.

21. Procédé de fabrication selon l'une quelconque des revendications 1 à 20, **caractérisé en ce que** ledit liant hydraulique est à base d'au moins un composé choisi dans le groupe constitué par du silicate de calcium, du sulfate de calcium et du phosphate de calcium.

22. Composition destinée à la fabrication d'un article comprenant une ou plusieurs couches superposées ayant chacune une épaisseur inférieure à 5 centimètres, comprenant un liant hydraulique et au moins un composé choisi parmi :
- un composé organique comprenant au moins deux fonctions hydrophiles et une chaîne hydrophobe choisi dans le groupe constitué par l'acide succinique, l'acide sébacique, l'acide adipique, l'acide octanodioïque, l'acide décanodioïque, l'acide dodécanoïque, l'acide brassylique, l'acide glutarique, ainsi que leurs sels, et/ou mélanges, et
- un oligomère de polyamide comprenant moins de 20 unités récurrentes obtenu à partir d'acide adipique et d'hexaméthylènediamine en proportions non-stoechiométriques avec un excès d'acide adipique pouvant aller jusqu'à 50%.

23. Composition selon la revendication 22, **caractérisée en ce qu'**elle comprend en outre au moins un composé choisi parmi le groupe constitué par un latex, un copolymère amphiphile hydrosoluble, et des fibres.

24. Article comprenant une ou plusieurs couches superposées ayant chacune une épaisseur inférieure à 5 centimètres obtenu selon le procédé de fabrication selon l'une quelconque des revendications 1 à 21 ou à partir de la composition selon l'une quelconque des revendications 22 à 23.

25. Utilisation d'une composition selon la revendication 22 ou 23 pour la fabrication d'article comprenant une ou plusieurs couches superposées ayant chacune une épaisseur inférieure à 5 centimètres tel qu'un enduis, un revêtement ou un coulis.

26. Utilisation d'une composition selon la revendication 22 ou 23 pour la fabrication d'article comprenant une ou plusieurs couches superposées ayant chacune une épaisseur inférieure à 5 centimètres tel qu'un fibrociment.

## Patentansprüche

1. Verfahren zur Herstellung eines Gegenstands mit einer oder mehreren übereinanderliegenden Schichten, die jeweils eine Dicke von weniger als 5 Zentimeter aufweisen, erhalten durch Verwendung einer Zusammensetzung, umfassend ein hydraulisches Bindemittel und mindestens eine aus:
- einer organischen Verbindung mit mindestens zwei hydrophilen Funktionen und einer hydrophoben Kette, ausgewählt aus der Gruppe bestehend aus Bernsteinsäure, Sebacinsäure, Adipinsäure, Octandisäure, Decandisäure, Dodecansäure, Brassylsäure, Glutarsäure sowie deren Salzen, Derivaten und/oder Mischungen, und
- einem Polyamid-Oligomer mit weniger als 20 Wiederholungseinheiten, erhalten aus Adipinsäure und Hexamethylendiamin in nichtstöchiometrischen Anteilen mit einem Überschuss von Adipinsäure, der bis zu 50% betragen kann, ausgewählte Verbindung.

2. Herstellungsverfahren nach Anspruch 1, **dadurch gekennzeichnet, dass** die Zusammensetzung einen Latex umfasst.

3. Herstellungsverfahren nach Anspruch 1 oder 2, **dadurch gekennzeichnet, dass** die Zusammensetzung Fasern umfasst.

4. Herstellungsverfahren nach einem der Ansprüche 1 bis 3, **dadurch gekennzeichnet, dass** die Zusammensetzung 0,05 bis 10 Gew.-% der organischen Verbindung, bezogen auf das Gesamtgewicht des hydraulischen Bindemittels, umfasst.

5. Herstellungsverfahren nach einem der Ansprüche 2 bis 4, **dadurch gekennzeichnet, dass** die Zusammensetzung 0,1 bis 15 Gew.-% Latex, bezogen auf das Gesamtgewicht des hydraulischen Bindemittels, umfasst.

6. Herstellungsverfahren nach einem der Ansprüche 3 bis 5, **dadurch gekennzeichnet, dass** die Zusammensetzung 0,1 bis 10 Gew.-% Fasern, bezogen auf das Gesamtgewicht des hydraulischen Bindemittels, umfasst.

7. Herstellverfahren nach Anspruch 1 bis 6, **dadurch gekennzeichnet, dass** es sich bei der organischen Verbindung um eine Mischung von Adipinsäure, Glutarsäure und Bernsteinsäure handelt.

8. Herstellungsverfahren nach einem der Ansprüche 2 bis 7, **dadurch gekennzeichnet, dass** es sich bei dem Latex um ein wasserunlösliches filmbildendes Polymer aus mindestens einem ethylenisch ungesättigten Monomer handelt.

9. Herstellungsverfahren nach Anspruch 8, **dadurch gekennzeichnet, dass** das ethylenisch ungesättigte Monomer aus Styrol, Butadien, Acrylsäure- oder Methacrylsäure-C₁-C₁₂-alkylestern und ihren entsprechenden Säuren und Vinylestern ausgewählt ist.

10. Herstellungsverfahren nach Anspruch 8 oder 9, **dadurch gekennzeichnet, dass** das wasserunlösliche filmbildende Polymer aus der Gruppe bestehend aus Vinyl- oder Acrylat-Homopolymeren, Vinylacetat-, Styrol/Butadien-, Styrol/acrylat-, Acrylsäureester- und Styrol/Butadien/Acrylat-Copolymeren ausgewählt ist.

11. Herstellungsverfahren nach einem der vorhergehenden Ansprüche, **dadurch gekennzeichnet, dass** die Zusammensetzung ein wasserlösliches amphiphiles Copolymer umfasst, das aus:
(i) mindestens einem durch Polymerisation von
□ mindestens einem ethylenisch ungesättigten Monomer (I) vom Monocarbonsäure- oder Polycarbonsäure-Typ oder auch einem Carbonsäure-Vorläufer vom Typ cyclisches, lineares oder verzweigtes aliphatisches Anhydrid und
□ mindestens einem monoethylenisch ungesättigten, linearen oder verzweigten Kohlenwasserstoffmonomer (II) erhaltenen Polymer,
(ii) mindestens einem Polymer aus der Polymerisation von mindestens einem ethylenisch ungesättigten Monocarbonsäure- oder Polycarbonsäure- oder cyclischen, linearen oder verzweigten aliphatischen Anhydrid-Monomer (I), das mindestens einen gesättigten oder ungesättigten hydrophoben C₄-C₃₀-Kohlenwasserstoff-Pfropfanteil, der gegebenenfalls durch ein oder mehrere Heteroatome unterbrochen ist, umfasst,
(iii) mindestens einem Polymer, erhalten durch chemische Modifizierung wie beispielsweise eine Veresterung, Umesterung oder Amidierung eines Vorläuferpolymers, das einerseits Stellen, auf die ein hydrophober Pfropfanteil aufgepfropft werden kann, wie beispielsweise Carbonsäure- oder Ester-Stellen, umfasst, wobei dieser hydrophobe Pfropfanteil andererseits Carbonsäure- oder Carbonsäurevorläufer-Einheiten umfasst, ausgewählt ist.

12. Herstellungsverfahren nach Anspruch 11, **dadurch gekennzeichnet, dass** in Variante (i)
• das Monomer (I) die folgende Formel aufweist:
(R¹)(R¹)C=C(R'¹)-COOH (I)
worin die Reste R¹ und R'¹ gleich oder verschieden sind und für ein Wasserstoffatom, einen C₁-C₁₀-Kohlenwasserstoffrest, der gegebenenfalls eine -COOH-Gruppe umfasst, oder eine -COOH-Gruppe stehen; und
• das Monomer der Formel (II) die folgende Formel aufweist:
(R²)(R³)C=C(R⁵)(R⁶) (II)
worin:
- der Rest R² für ein Wasserstoffatom oder einen linearen oder verzweigten C₁-C₁₀-Alkylrest, der gegebenenfalls durch Heteroatome substituiert ist, steht;
- der Rest R³ für einen linearen oder verzweigten C₁-C₁₀-Alkylrest, der gegebenenfalls durch Heteroatome substituiert ist, oder einen -O-R⁴-Rest steht, d.h. ein Vinylether, wobei R⁴ für einen linearen oder verzweigten C₁-C₁₀-Alkylrest, der gegebenenfalls durch Heteroatome substituiert ist, steht;
- der Rest R⁵ für ein Wasserstoffatom oder einen linearen oder verzweigten C₁-C₁₀-Alkylrest, der gegebenenfalls durch Heteroatome substituiert ist, steht;
- der Rest R⁶ für ein Wasserstoffatom oder einen linearen oder verzweigten C₁-C₁₀-Alkylrest, der gegebenenfalls durch Heteroatome substituiert ist, steht;
mit der Maßgabe, dass mindestens einer der Reste R², R³, R⁵ oder R⁶ für einen linearen oder verzweigten C₁-C₁₀-Alkylrest, der gegebenenfalls durch Heteroatome substituiert ist, steht.

13. Herstellungsverfahren nach Anspruch 12, **dadurch gekennzeichnet, dass** das Monomer der Formel (I) so beschaffen ist, dass:
- einer der Reste R¹ für ein Wasserstoffatom steht;
- der andere Rest R¹ für ein Wasserstoffatom, eine -COOH-Gruppe oder eine -(CH₂)ₙ-COOH-Gruppe, worin n einen Wert zwischen 1 und 4 hat, oder einen C₁-C₄-Alkylrest steht;
- R'¹ für ein Wasserstoffatom, eine -(CH₂)ₘ-COOH-Gruppe, worin m einen Wert zwischen 1 und 4 hat, oder einen C₁-C₄-Alkylrest steht.

14. Herstellungsverfahren nach Anspruch 13, **dadurch gekennzeichnet, dass** das Monomer der Formel (I) so beschaffen ist, dass:
- einer der Reste R¹ für ein Wasserstoffatom steht;
- der andere Rest R¹ für ein Wasserstoffatom, eine -COOH- oder (CH₂)-COOH-Gruppe oder einen Methylrest steht; und
- R'¹ für ein Wasserstoffatom, eine -CH₂-COOH-Gruppe oder einen Methylrest steht.

15. Herstellungsverfahren nach Anspruch 14, **dadurch gekennzeichnet, dass** das Monomer der Formel (I) aus Acrylsäure, Methacrylsäure, Citraconsäure, Maleinsäure, Fumarsäure, Itaconsäure oder Crotonsäure oder deren Anhydriden ausgewählt ist.

16. Herstellungsverfahren nach Anspruch 15, **dadurch gekennzeichnet, dass** es sich bei dem Monomer der Formel (I) und Maleinsäureanhydrid handelt.

17. Herstellungsverfahren nach Anspruch 12, **dadurch gekennzeichnet, dass** das Monomer der Formel (II) aus Ethylen, Propylen, 1-Buten, Isobutylen, n-1-Penten, 2-Methyl-1-buten, n-1-Hexen, 2-Methyl-1-penten, 4-Methyl-1-penten, 2-Ethyl-1-buten, Diisobutylen (oder 2,4,4-Trimethyl-1-penten), 2-Methyl-3,3-dimethyl-1-penten, Isobutylvinylether, Methylvinylether, 1-Menthylvinylether, Phenylvinylether oder Octadecylvinylether ausgewählt ist.

18. Herstellungsverfahren nach einem der Ansprüche 12 bis 17, **dadurch gekennzeichnet, dass** das Copolymer der Formel (i) aus der Polymerisation von Maleinsäureanhydrid und Isobutylen stammt.

19. Herstellungsverfahren nach einem der Ansprüche 11 bis 18, **dadurch gekennzeichnet, dass** die Zusammensetzung 0,1 bis 5 Gew.-% wasserlösliches amphiphiles Copolymer, bezogen auf das Gesamtgewicht des hydraulischen Bindemittels, umfasst.

20. Herstellungsverfahren nach einem der Ansprüche 3 bis 19, **dadurch gekennzeichnet, dass** die Fasern aus der Gruppe bestehend aus Glasfasern, Kohlenstofffasern, Stahlfasern, Polyamidfasern, Polyesterfasern, Poly(vinylalkohol)fasern, Polypropylenfasern und Poly(acrylnitril)fasern, Derivaten davon und/oder Mischungen davon ausgewählt sind.

21. Herstellungsverfahren nach einem der Ansprüche 1 bis 20, **dadurch gekennzeichnet, dass** das hydraulische Bindemittel auf mindestens einer Verbindung aus der Gruppe bestehend aus Calciumsilicat, Calciumsulfat und Calciumphosphat basiert.

22. Zusammensetzung zur Herstellung eines Gegenstands mit einer oder mehreren übereinanderliegenden Schichten, die jeweils eine Dicke von weniger als 5 Zentimeter aufweisen, umfassend ein hydraulisches Bindemittel und mindestens eine aus:
- einer organischen Verbindung mit mindestens zwei hydrophilen Funktionen und einer hydrophoben Kette, ausgewählt aus der Gruppe bestehend aus Bernsteinsäure, Sebacinsäure, Adipinsäure, Octandisäure, Decandisäure, Dodecansäure, Brassylsäure, Glutarsäure sowie deren Salzen und/oder Mischungen, und
- einem Polyamid-Oligomer mit weniger als 20 Wiederholungseinheiten, erhalten aus Adipinsäure und Hexamethylendiamin in nichtstöchiometrischen Anteilen mit einem Überschuss von Adipinsäure, der bis zu 50% betragen kann,
ausgewählte Verbindung.

23. Zusammensetzung nach Anspruch 22, **dadurch gekennzeichnet, dass** sie außerdem mindestens eine Verbindung aus der Gruppe bestehend aus einem Latex, einem wasserlöslichen amphiphilen Copolymer und Fasern umfasst.

24. Gegenstand mit einer oder mehreren übereinanderliegenden Schichten, die jeweils eine Dicke von weniger als 5 Zentimeter aufweisen, erhalten gemäß dem Herstellungsverfahren nach einem der Ansprüche 1 bis 21 oder aus der Zusammensetzung nach einem der Ansprüche 22 bis 23.

25. Verwendung einer Zusammensetzung nach Anspruch 22 oder 23 zur Herstellung eines Gegenstands mit einer oder mehreren übereinanderliegenden Schichten, die jeweils eine Dicke von weniger als 5 Zentimeter aufweisen, wie eines Putzes, eines Überzugs oder einer Ausfugmasse.

26. Verwendung einer Zusammensetzung nach Anspruch 22 oder 23 zur Herstellung eines Gegenstands mit einer oder mehreren übereinanderliegenden Schichten, die jeweils eine Dicke von weniger als 5 Zentimeter aufweisen, wie eines Faserzements.

## Claims

1. Process for manufacturing an article comprising one or more superposed layers each less than 5 centimetres thick, obtained by using a composition comprising a hydraulic binder and at least one compound chosen from:
- an organic compound comprising at least two hydrophilic functions and a hydrophobic chain, chosen from the group consisting of succinic acid, sebacic acid, adipic acid, octanedioic acid, decanedioic acid, dodecanoic acid, brassylic acid and glutaric acid, and also the salts, derivatives and/or mixtures thereof, and
- a polyamide oligomer comprising less than 20 repeating units obtained from adipic acid and hexamethylenediamine in non-stoichiometric proportions with an excess of adipic acid that may be up to 50%.

2. Manufacturing process according to Claim 1 **characterized in that** the composition comprises a latex.

3. Manufacturing process according to Claim 1 or 2, **characterized in that** the composition comprises fibres.

4. Manufacturing process according to any one of Claims 1 to 3, **characterized in that** the composition comprises from 0.05% to 10% by weight of the said organic compound relative to the total weight of hydraulic binder.

5. Manufacturing process according to any one of Claims 2 to 4, **characterized in that** the composition comprises from 0.1% to 15% by weight of latex relative to the total weight of hydraulic binder.

6. Manufacturing process according to any one of Claims 3 to 5, **characterized in that** the composition comprises from 0.1% to 10% by weight of fibres relative to the total weight of hydraulic binder.

7. Manufacturing process according to Claims 1 to 6, **characterized in that** the organic compound is a mixture of adipic acid, glutaric acid and succinic acid.

8. Manufacturing process according to any one of Claims 2 to 7, **characterized in that** the latex is a water-insoluble film-forming polymer prepared from at least one ethylenically unsaturated monomer.

9. Manufacturing process according to Claim 8, **characterized in that** the ethylenically unsaturated monomer is chosen from styrene, butadiene, C₁-C₁₂ alkyl acrylic or methacrylic esters and the corresponding acids thereof, and vinyl esters.

10. Manufacturing process according to Claim 8 or 9, **characterized in that** the water-insoluble film-forming polymer is chosen from the group consisting of vinyl or acrylate homopolymers, and copolymers of vinyl acetate, of styrene/butadiene, of styrene/acrylate, of acrylic esters and of styrene/butadiene/acrylate.

11. Manufacturing process according to one of the preceding claims, **characterized in that** the composition comprises a water-soluble amphiphilic copolymer chosen from:
(i) at least one polymer obtained by polymerization
□ of at least one ethylenically unsaturated monomer (I) of monocarboxylic or polycarboxylic acid type, or a carboxylic acid precursor of cyclic, linear or branched aliphatic or anhydride type, and
□ of at least one monoethylenically unsaturated linear or branched hydrocarbon-based monomer (II),
(ii) at least one polymer derived from the polymerization of at least one monocarboxylic or polycarboxylic acid monomer (I) or cyclic, linear or branched, ethylenically unsaturated aliphatic anhydride, and comprising at least one saturated or unsaturated C₄-C₃₀ hydrocarbon-based hydrophobic graft, optionally interrupted with one or more hetero atoms,
(iii) at least one polymer obtained by chemical modification, for instance esterification, transesterification or amidation, of a precursor polymer on the one hand comprising sites onto which a hydrophobic graft may be grafted, for instance carboxylic acid or ester sites, this hydrophobic graft on the other hand comprising carboxylic acid units or carboxylic acid precursor units.

12. Manufacturing process according to Claim 11, **characterized in that**, in variant (i)
• the monomer (I) has the following formula:
(R¹)(R¹)C=C(R'¹) -COOH (I)
in which formula the radicals R¹ and R'¹, which may be identical or different, represent a hydrogen atom, a C₁-C₁₀ hydrocarbon-based radical optionally comprising a -COOH group, or a -COOH group; and
• the monomer of formula (II) has the following formula:
(R²)(R³)C=C(R⁵)(R⁶) (II)
in which formula:
- the radical R² represents a hydrogen atom or a linear or branched C₁-C₁₀ alkyl radical optionally substituted with hetero atoms;
- the radical R³ represents a linear or branched C₁-C₁₀ alkyl radical optionally substituted with hetero atoms, or a radical -O-R⁴, i.e. a vinyl ether, with R⁴ representing a linear or branched C₁-C₁₀ alkyl radical optionally substituted with hetero atoms;
- the radical R⁵ represents a hydrogen atom or a linear or branched C₁-C₁₀ alkyl radical optionally substituted with hetero atoms;
- the radical R⁶ represents a hydrogen atom or a linear or branched C₁-C₁₀ alkyl radical optionally substituted with hetero atoms;
it being understood that at least one of the radicals R², R³, R⁵ or R⁶ represents a linear or branched C₁-C₁₀ alkyl radical optionally substituted with hetero atoms.

13. Manufacturing process according to Claim 12, **characterized in that** the monomer of formula (I) is such that:
- one of the radicals R¹ is a hydrogen atom;
- the other radical R¹ represents a hydrogen atom, a -COOH group or a group -(CH₂)ₙ-COOH in which n is between 1 and 4, or a C₁-C₄ alkyl radical;
- R'¹ represents a hydrogen atom, a group -(CH₂)ₘ-COOH in which m is between 1 and 4, or a C₁-C₄ alkyl radical.

14. Manufacturing process according to Claim 13, **characterized in that** the monomer of formula (I) is such that:
- one of the radicals R¹ represents a hydrogen atom,
- the other radical R¹ represents a hydrogen atom, a -COOH or (CH₂)-COOH group or a methyl radical, and
- R'¹ represents a hydrogen atom, a -CH₂COOH group or a methyl radical.

15. Manufacturing process according to Claim 14, **characterized in that** the monomer of formula (I) is chosen from acrylic, methacrylic, citraconic, maleic, fumaric, itaconic or crotonic acid or anhydride.

16. Manufacturing process according to Claim 15, **characterized in that** the monomer of formula (I) is maleic anhydride.

17. Manufacturing process according to Claim 12, **characterized in that** the monomer of formula (II) is chosen from ethylene, propylene, 1-butene, isobutylene, n-1-pentene, 2-methyl-1-butene, n-1-hexene, 2-methyl-1-pentene, 4-methyl-1-pentene, 2-ethyl-1-butene, diisobutylene (or 2,4,4-trimethyl-1-pentene), 2-methyl-3,3-dimethyl-1-pentene, isobutyl vinyl ether, methyl vinyl ether, 1-menthyl vinyl ether, phenyl vinyl ether or octadecyl vinyl ether.

18. Manufacturing process according to one of Claims 12 to 17, **characterized in that** the copolymer of formula (i) is derived from the polymerization of maleic anhydride and isobutylene.

19. Manufacturing process according to any one of Claims 11 to 18, **characterized in that** the composition comprises from 0.1% to 5% by weight of water-soluble amphiphilic copolymer relative to the total weight of hydraulic binder.

20. Manufacturing process according to any one of Claims 3 to 19, **characterized in that** the fibres are chosen from the group consisting of glass fibres, carbon fibres, steel fibres, polyamide fibres, polyester fibres, poly(vinyl alcohol) fibres, polypropylene fibres and poly(acrylonitrile) fibres, derivatives thereof and/or mixtures thereof.

21. Manufacturing process according to any one of Claims 1 to 20, **characterized in that** the said hydraulic binder is based on at least one compound chosen from the group consisting of calcium silicate, calcium sulphate and calcium phosphate.

22. Composition for manufacturing an article comprising one or more superposed layers each less than 5 centimetres thick, comprising a hydraulic binder and at least one compound chosen from:
- an organic compound comprising at least two hydrophilic functions and a hydrophobic chain, chosen from the group consisting of succinic acid, sebacic acid, adipic acid, octanedioic acid, decanedioic acid, dodecanoic acid, brassylic acid and glutaric acid, and also the salts, derivatives and/or mixtures thereof, and
- a polyamide oligomer comprising less than 20 repeating units obtained from adipic acid and hexamethylenediamine in non-stoichiometric proportions with an excess of adipic acid that may be up to 50%.

23. Composition according to Claim 22, **characterized in that** it also comprises at least one compound chosen from the group consisting of a latex, a water-soluble amphiphilic copolymer and fibres.

24. Article comprising one or more superposed layers each less than 5 centimetres thick, obtained according to the manufacturing process according to any one of Claims 1 to 21 or from the composition according to either of Claims 22 and 23.

25. Use of a composition according to Claim 22 or 23 for the manufacture of an article comprising one or more superposed layers each less than 5 centimetres thick, such as a coating, a covering or a grout.

26. Use of a composition according to Claim 22 or 23 for the manufacture of an article comprising one or more superposed layers each less than 5 centimetres thick, such as a fibrocement.
